# DEMANDE DE BREVET EUROPEEN

(11) **EP 1 254 972 A1**
(43) Date de publication de la demande: **06.11.2002**
(21) Numéro de dépôt: 01810430.7
(22) Date de dépôt: 01.05.2001
(51) Int. Cl.: C25B 9/00, H01M 8/24

(54) **Cellule electrochimique modulaire**

(71) Demandeur: CSEM Centre Suisse d'Electronique et de Microtechnique SA, 2007 Neuchâtel (CH)
(72) Inventeur: Haenni, Werner, 2034 Peseux (CH); Faure, Cédric, 2016 Cortaillod (CH); Rychen, Philippe, 60640 Muespach-le-Haut (CH)
(74) Mandataire: Gresset, Jean

(57) **Abrégé**

L'invention concerne une cellule électrochimique modulaire qui comporte:
- deux ensembles sensiblement identiques (10,12) comprenant chacun un bâti (14) percé d'un logement cylindrique et d'une ouverture (36) le traversant dans sa portion située à l'extérieur dudit logement et pouvant être reliée à un conduit d'amenée ou d'évacuation d'un fluide, et une électrode (22) en forme de disque disposée à l'interieur de chaque logement, les deux bâtis étant disposés de manière à ce que leurs électrodes respectives soient en face l'une de l'autre,
- inséré entre lesdits ensembles, des moyens intercalaires (38) ayant, au moins, pour fonction d'assurer la circulation et la répartition dudit fluide entre les électrodes, et
- des organes (44) d'assemblage entre eux desdits ensembles et desdits moyens intercalaires.
Des électrodes comprenant une couche conductrice de diamant peuvent être utilisées. L'ouverture (36) peut, en outre, avoir la forme d'une rainure en arc de cercle.
Cette cellule trouve est utilisable pour la dépollution des eaux usées par oxydation des contaminants qu'elles contiennent.

## Description

La présente invention se rapporte aux cellules électrochimiques. Elle concerne, plus particulièrement, une cellule électrochimique modulaire qui utilise des électrodes en forme de disque, avantageusement en diamant, aussi bien en mode monopolaire qu'en mode bipolaire, avec des espacements d'électrodes ajustables à volonté et dans les configurations les plus diverses permettant, notamment, de travailler avec deux ou trois flux de liquides différents.

Grâce à sa modularité, la cellule selon l'invention est ainsi utilisable, de manière très simple, aussi bien pour des travaux de recherche et développement que dans des installations pilotes ou industrielles.

Ce type de cellule électrochimique trouve une application particulièrement intéressante dans la dépollution des eaux usées par oxydation des contaminants qu'elles contiennent.

De façon plus précise, la cellule électrochimique modulaire selon l'invention est caractérisée en ce qu'elle comporte:
- deux ensembles sensiblement identiques comprenant chacun un bâti percé d'un logement cylindrique et d'une ouverture le traversant dans sa portion située à l'extérieur dudit logement et pouvant être reliée à un conduit d'amenée ou d'évacuation d'un fluide, et une électrode en forme de disque disposée à l'intérieur de chaque logement, lesdits bâtis étant disposés de manière à ce que leurs électrodes respectives soient en face l'une de l'autre,
- inséré entre lesdits ensembles, des moyens intercalaires ayant, au moins, pour fonction d'assurer la circulation et la répartition dudit fluide entre les électrodes, et
- des organes d'assemblage entre eux desdits ensembles et desdits moyens intercalaires.

De préférence, les électrodes comportent un substrat conducteur et une couche conductrice de diamant déposée sur le substrat. Par ailleurs, chaque électrode est fixée sur un disque support conducteur pouvant être connecté à une source d'alimentation et dont la position axiale à l'intérieur du logement est réglable de l'extérieur pour affleurer la face externe de l'électrode et le bord du bâti. De plus, le logement contient avantageusement une bague entourant le disque support et dont la position axiale est réglable de l'extérieur pour venir comprimer un joint d'étanchéité entre l'électrode, le logement et le disque.

Dans un premier type de configuration, les deux bâtis ont chacun une ouverture qui débouche, vers l'intérieur, par une rainure en arc de cercle et sont disposés de manière à ce que lesdites rainures se trouvent diamétralement opposées, l'ouverture d'un bâti servant à l'amenée du fluide et l'ouverture de l'autre bâti à son évacuation.

Selon un mode de réalisation utilisant cette première configuration, lesdits moyens intercalaires comportent une rondelle isolante percée d'orifices situés en regard desdites rainures, chacun de ces orifices communiquant avec la portion interne de la rondelle par un canal radial.

Selon un autre mode de réalisation, lesdits moyens intercalaires comportent:
- un anneau d'espacement plat isolant percé d'orifices situés en regard desdites rainures, chacun de ces orifices communiquant avec la portion interne de l'anneau par un canal radial, et
- deux rondelles isolantes disposées de part et d'autre de l'anneau et percées chacune d'une fente en arc de cercle située en regard d'une des rainures.

Selon encore un autre mode de réalisation, lesdits moyens intercalaires comportent:
- un anneau plat isolant percé de deux fentes en arc de cercle situées en regard desdites rainures,
- une électrode bipolaire en forme de disque disposée à l'intérieur dudit anneau, et
- deux rondelles isolantes disposées de part et d'autre de l'anneau et percées chacune d'orifices situés en regard d'une des rainures, chacun de ces orifices communiquant avec la portion interne de la rondelle par un canal radial.

Dans un deuxième type de configuration, les bâtis ont chacun deux ouvertures qui débouchent, vers l'intérieur, par deux rainures en arc de cercle diamétralement opposées, lesdits bâtis étant disposés de manière à ce que leurs rainures respectives se trouvent en regard, les ouvertures de chaque bâti servant respectivement à l'amenée et à l'évacuation d'un fluide.

Selon un mode de réalisation utilisant cette deuxième configuration, lesdits moyens intercalaires comportent:
- une membrane conductrice permsélective de type échangeuse d'ions ou un diaphragme poreux, et
- deux rondelles isolantes disposées de part et d'autre de la membrane ou du diaphragme et percées chacune d'orifices situés en regard desdites rainures, chacun de ces orifices communiquant avec la portion interne de la rondelle par un canal radial.

Selon un autre mode de réalisation, lesdits moyens intercalaires comportent:
- un anneau creux central pouvant être relié à un conduit d'amenée et à un conduit d'évacuation de fluide,
- deux rondelles isolantes disposées de part et d'autre de l'anneau,
- deux membranes conductrices permsélectives de type échangeuses d'ions ou deux diaphragmes poreux disposés respectivement de l'autre côté des deux rondelles, et
- deux rondelles isolantes disposées respectivement de l'autre côté des deux membranes ou diaphragmes et percées chacune d'orifices situés en regard desdites rainures, chacun de ces orifices communiquant avec la portion interne de la rondelle par un canal radial.

D'autres caractéristiques de l'invention ressortiront de la description qui va suivre, faite en regard du dessin annexé dans lequel:
- les figures 1 et 2 représentent, respectivement en coupe axiale en en perspective éclatée, un premier mode de réalisation d'une cellule monopolaire,
- la figure 3 représente, en perspective éclatée, un deuxième mode de réalisation d'une cellule monopolaire à grand espace interélectrodes,
- la figure 4 représente, en perspective éclatée, un troisième mode de réalisation d'une cellule bipolaire,
- la figure 5 représente, en perspective éclatée, un quatrième mode de réalisation d'une cellule à membrane, et
- la figure 6 représente, en perspective éclatée, un cinquième mode de réalisation d'une cellule à deux membranes.

On notera que, dans la présente description, les éléments communs aux différents modes de réalisation de l'invention sont désignés par les mêmes numéros de référence.

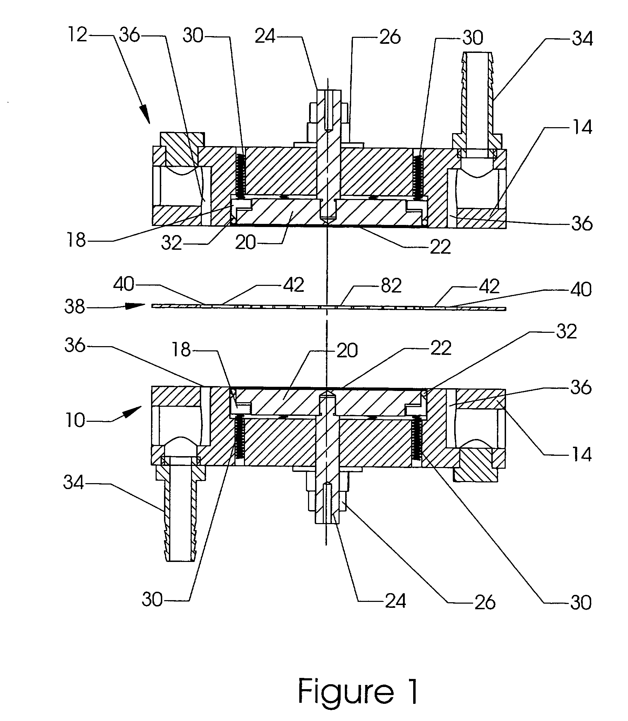

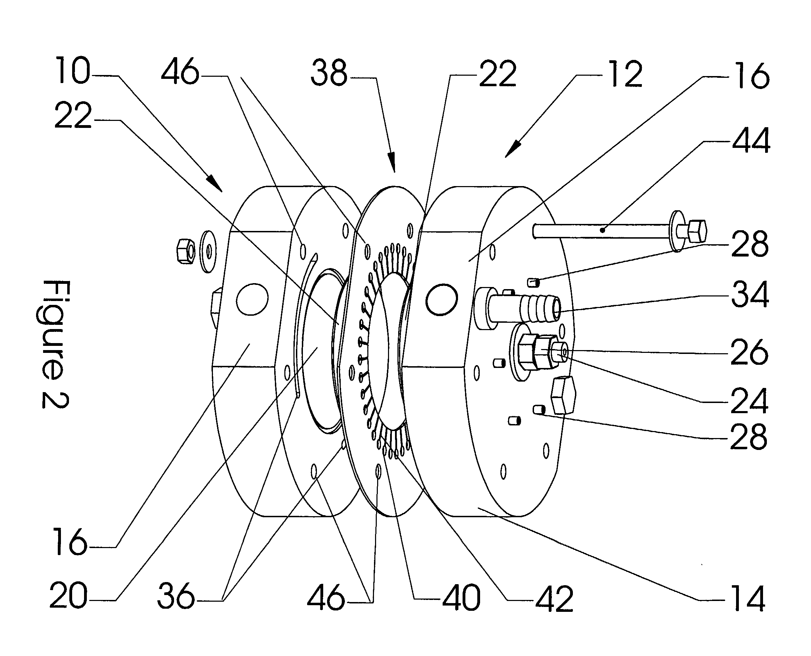

Sur les figures 1 et 2, on a représenté en 10 et 12 deux ensembles identiques. Chacun a pour base un bâti 14, réalisé en polypropylène, qui a la forme d'un disque présentant deux portions tronquées 16 diamétralement opposées pour former deux faces planes servant de base stable au dispositif.

La cage 14 est percée d'un logement cylindrique central à l'intérieur duquel prend place une bague mobile à section en L 18, en aluminium ou en plastique, recevant, également de manière mobile, un disque 20, en cuivre ou en nickel.

La face extérieure du disque 20 reçoit, par soudage à l'étain ou par collage au moyen d'un pâte à base d'argent, une électrode 22 formée d'un substrat qui peut être, par exemple, en silicium, en carbure de silicium, en titane ou en zirconium, revêtu sur sa face externe d'une couche de diamant dopé pour être rendu électriquement conducteur. Cette électrode peut être avantageusement réalisée selon la technique décrite dans le document FR 99 02483.

La face intérieure du disque 20 est fixée à l'extrémité d'une vis centrale 24 traversant un trou taraudé ménagé dans le fond de la cage 14 et dont l'autre extrémité reçoit un écrou de blocage 26.

Le fond de la cage 14 est percé de six trous taraudés, régulièrement répartis sur son pourtour, recevant une vis 28 actionnable de l'extérieur pour agir sur la bague 18 par l'intermédiaire d'un ressort à boudin 30.

On notera que le bord de la bague 18 faisant face à l'électrode 22 comporte une face biseautée sur l'extérieur, qui agit sur un joint d'étanchéité torique 32 emprisonné entre l'électrode, la paroi du logement et le disque.

Enfin, la cage 14 est percée sur son bord, en dehors du périmètre occupé par l'électrode, d'un trou taraudé dans lequel se visse un embout 34 destiné au branchement un tuyau non représenté. Cet embout débouche, à l'intérieur, dans une rainure 36 ayant la forme d'un arc de cercle d'environ 90°, de même axe que l'ensemble. Les figures montrent, en réalité, deux rainures 36 diamétralement opposées car, dans une configuration décrite plus loin, la cellule selon l'invention en a besoin.

La cellule comporte encore, entre les deux ensembles 10 et 12, une rondelle d'alimentation 38 qui est réalisée en un élastomère comme, par exemple, l'un des produits commercialisés sous les désignations de Viton et EPDM. Cette rondelle a un contour externe correspondant à celui des cages 14 et un contour interne circulaire de même diamètre que celui des électrodes 22.

La rondelle 38 est percée d'orifices circulaires 40 de diamètre correspondant à l'épaisseur de la rainure 36 et formant une ceinture de même rayon qu'elle. Les orifices 40 se trouvent ainsi en regard de la rainure 36. Chacun de ces orifices communique avec la portion interne de la rondelle 38 par un canal radial 42.

Les figures montrent que les orifices 40 couvrent toute la périphérie de la rondelle 38, bien que seuls soient utiles ceux qui sont situés en regard de la rainure 36. Cette disposition a cependant l'avantage de rendre le rondelle parfaitement homogène. Bien entendu, on pourrait se contenter d'une série d'orifices 40 uniquement en regard de la rainure.

Les deux ensembles 10 et 12, avec la rondelle 38 insérée entre eux et les embouts 34 disposés de manière diamétralement opposée, sont assemblés au moyen de six boulons et écrous répartis à la périphérie de la cellule. Afin de ne pas encombrer le dessin, on a représenté seulement, sur la figure 2, les têtes 44 de ces boulons et les trous 46 ménagés dans les cages 14 et la rondelle 38 pour permettre leur passage.

Avant d'assembler la cellule qui vient d'être décrite, il y a lieu, pour chacun des ensembles 10 et 12, d'affleurer la face externe de l'électrode 22 et la face interne de la cage 14. Ceci est réalisé en agissant sur la vis 24 puis, une fois l'affleurement réalisé, en la bloquant au moyen de l'écrou 26. Lorsque l'assemblage a été effectué, à l'aide des six boulons-écrous, les six vis 28 servent, avec l'aide des ressorts 30, à comprimer le joint 32 contre l'électrode 22.

En fonctionnement, les vis 24 sont respectivement reliées aux bornes d'une source d'alimentation appropriée, tandis que des canalisations d'amenée et d'évacuation de liquide sont respectivement branchées sur les embouts 34. Le liquide introduit dans la cellule par l'un des embouts est, typiquement, une eau usée polluée. Le processus d'électrolyse réalisé dans la cellule permettra de faire apparaître sur l'autre embout une eau purifiée accompagnée de gaz résultant de la réaction intervenue.

Grâce à la structure de la cellule, le liquide introduit sous pression, par exemple au bas de l'ensemble de gauche 10, débouche dans la rainure inférieure 36 puis dans les orifices 40 de la rondelle 38 qui se trouvent en face d'elle, avant d'être injecté dans l'espace séparant les deux électrodes 22 par les canaux radiaux 42 associés aux orifices 40. Le liquide est soumis, dans cet espace, au processus d'électrolyse puis est introduit, en haut de l'ensemble de droite 12, dans la rainure supérieure 36 au travers des canaux 42 et des orifices 40 correspondants avant d'être évacué vers l'extérieur.

Pour fixer les idées, et à titre purement indicatif, les électrodes 22 ont un diamètre de l'ordre de 10 cm et une épaisseur comprise entre 0,5 et 3mm, tandis que disque 20 a une épaisseur de 10 à 12 mm. L'épaisseur de la rondelle 38 est également comprise entre 0,5 et 3 mm.

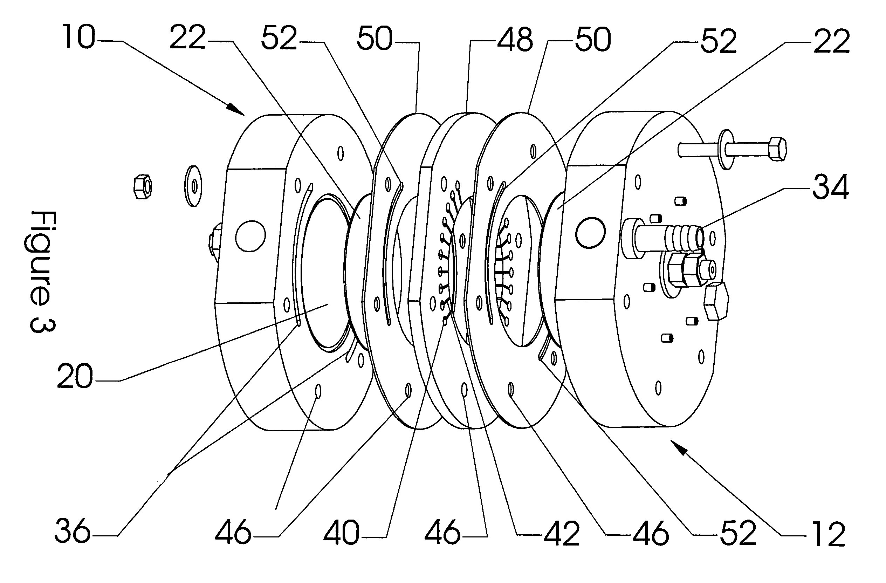

La cellule qui vient d'être décrite convient pour des fluides à relativement faible conductivité. Lorsqu'on travaille avec des électrolytes à haute conductivité, typiquement supérieure à 3 - 5 mS/cm, il est nécessaire d'augmenter l'espace entre les deux électrodes. Dans ce cas, qui constitue le deuxième mode de réalisation de la cellule selon l'invention, la rondelle d'alimentation 38 est remplacée, comme le montre la figure 3, par un anneau d'espacement 48, réalisé en polypropylène, et par deux rondelles identiques 50, disposées de part et d'autre de l'anneau 48, et réalisées, comme la rondelle 38, en un élastomère. Ces trois composants ont les mêmes contours externe et interne que la rondelle 38.

L'anneau d'espacement 48, dont l'épaisseur peut aller jusqu'à 10 mm, comporte la même série d'orifices circulaires 40 et les mêmes canaux radiaux 42 que la rondelle 38.

Les rondelles 50 comportent seulement, en plus des trous 46 pour le passage des boulons, deux fentes 52 (dont une seule est utile) de même forme que les fentes 36 et positionnées de manière à venir à leur regard lors de l'assemblage de la cellule.

On voit ainsi que, dans cette réalisation, la distribution du liquide dans l'espace entre les électrodes puis sa collecte sont assurées par l'anneau central 48, les deux rondelles 50 ne servant qu'à permettre le transport du liquide entre les cages 14 et l'anneau 48.

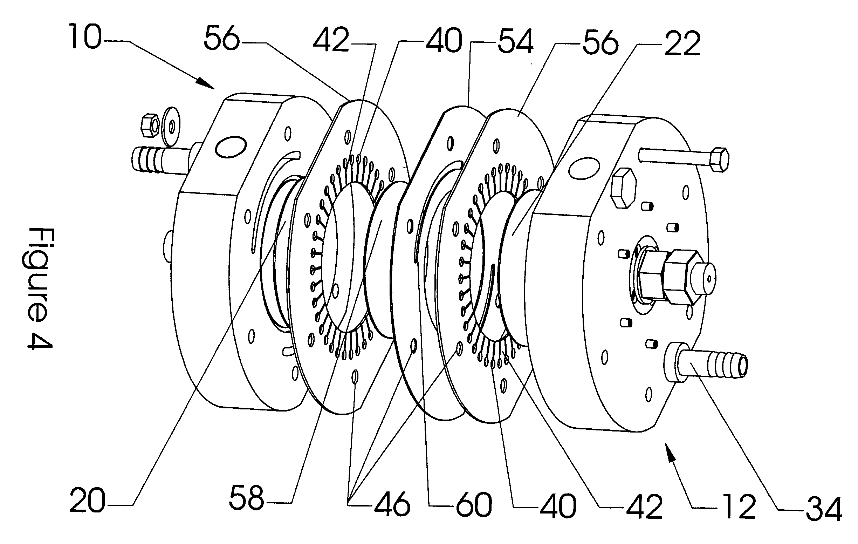

La cellule précédemment décrite peut aussi prendre une structure bipolaire. Dans ce cas, qui constitue le troisième mode de mise en oeuvre de l'invention, la rondelle d'alimentation 38 du premier mode de réalisation est remplacée, comme le montre la figure 4, par un anneau 54 en polypropylène, et par deux rondelles identiques 56, disposées de part et d'autre de l'anneau 54, et réalisées en un élastomère. Ces trois composants ont les mêmes contours externe et interne que la rondelle 38.

L'intérieur de l'anneau reçoit une électrode 58, de même épaisseur et de même diamètre que les électrodes 22. Elle est formée d'un substrat conducteur revêtu sur ses deux faces d'une couche de diamant dopé pour être rendu électriquement conducteur. L'électrode 58, de même que les deux électrodes 22, peuvent être avantageusement réalisées selon l'enseignement du document EP 810147.9.

L'anneau 54 comporte, en plus des trous pour le passage des boulons, deux fentes 60 diamétralement opposées, de même forme que les rainures 36 et positionnées de manière à venir à leur regard lors de l'assemblage de la cellule.

Les deux rondelles 56 sont identiques à la rondelle 38. Dans cette réalisation, ce sont elles qui assurent la distribution et la collecte du liquide.

Bien entendu, la cellule bipolaire de la figure 4 peut comporter plusieurs électrodes intermédiaires 58 associées à un anneau 54, afin d'assurer, comme pour la cellule de la figure 3, un plus grand espace interélectrodes. Dans ce cas, des rondelles supplémentaires 56 sont insérées entre les différents anneaux 54.

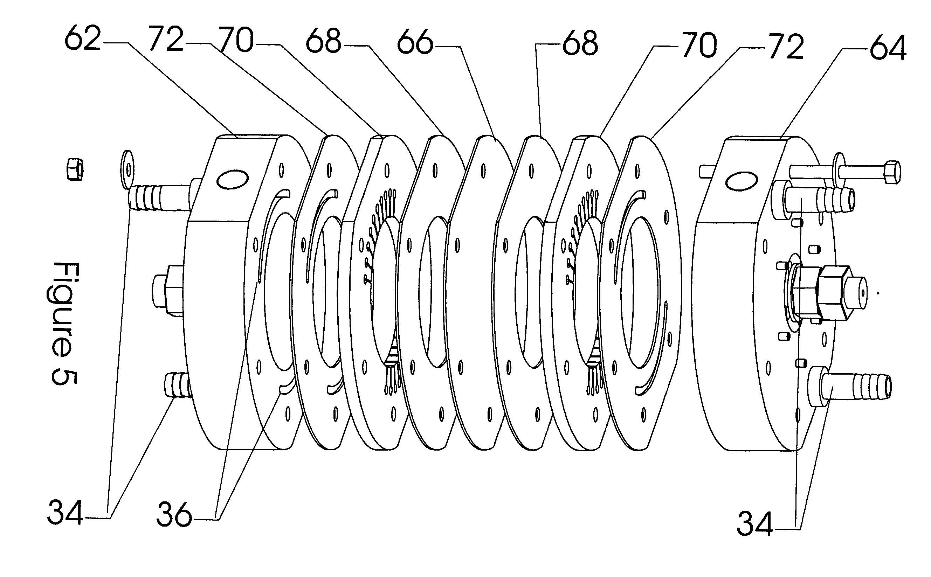

Selon un quatrième mode de mise en oeuvre de l'invention, représenté à la figure 5, les ensembles 10 et 12 de la figure 1 sont remplacés par des ensembles 62 et 64 qui s'en distinguent seulement par le fait qu'ils comportent deux embouts 34 et obligatoirement deux rainures circulaires 36, diamétralement opposés, le liquide à traiter étant alors amené par l'un des embouts et ressortant par l'autre. Cette cellule travaille avec deux électrolytes qui ne se mélangent pas et forment respectivement, selon un processus connu, un flux d'anolyte et un flux de catholyte.

Dans ce cas, la rondelle d'alimentation 38 de la figure 1 est remplacée par un empilement dont l'élément central est une membrane 66 réalisée en un matériau électriquement conducteur et sélectivement perméable à certains ions, telle qu'une membrane échangeuse d'ions en Nafion. En variante, la membrane 66 peut être remplacée par un diaphragme poreux. De part et d'autre de cet élément, on trouve, disposés symétriquement, deux rondelles 68 en élastomère, puis deux anneaux 70 en polypropylène et, enfin, deux nouvelles rondelles 72 en élastomère fluoré. Tous ces composants ont le même contour externe que la rondelle 38 et possèdent les six trous 46 pour le passage des boulons d'assemblage. Les rondelles 68 et 72 et l'anneau 70 ont aussi le même contour intérieur circulaire que la rondelle 38.

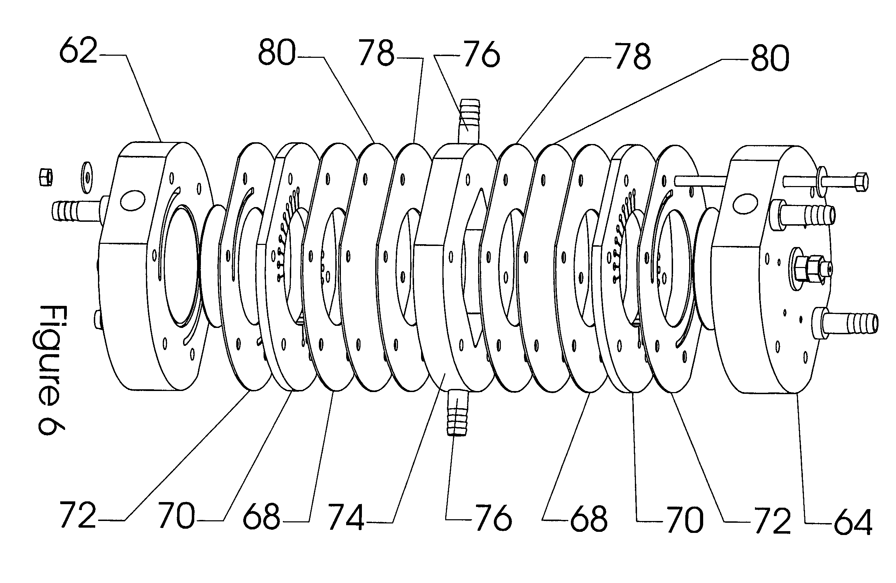

Les rondelles 68 ne comportent aucune autre ouverture particulière. Les anneaux 70 sont identiques à l'anneau d'espacement 48 de la figure 3, tandis que les rondelles 72 ont les mêmes fentes 60 que l'anneau 54 de la figure 4. On remarquera que, dans la réalisation de la figure 5, les anneaux 70 servent uniquement à augmenter l'espace entre les électrodes, comme c'est le cas de l'anneau 48 de la figure 3. Lorsque cette cellule doit travailler avec des liquides à faible conductivité, on peut donc supprimer les anneaux 70 ainsi que les rondelles 68 et 72 et les remplacer par les rondelles 38 de la figure 1. Enfin, la figure 6 représente un cinquième mode de réalisation de la cellule selon l'invention. Dans ce cas, la rondelle d'alimentation 38 de la figure 1 est remplacée par un empilement d'éléments ayant le même contour externe que la rondelle 38 et possédant les six trous 46 pour le passage des boulons d'assemblage. L'élément central est un anneau creux 74, réalisé en polypropylène, doté de deux embouts 76 diamétralement opposés, destinés à être raccordés respectivement à un conduit d'amenée et à un conduit d'évacuation de liquide.

La cellule de la figure 6 peut travailler, selon un processus connu, avec trois flux séparés, à savoir un flux d'anolyte et un flux de catholyte, circulant respectivement dans les ensembles 62 et 64, et un flux de liquide à traiter circulant au travers de l'anneau 74.

De part en d'autre de cet anneau, on trouve, disposés symétriquement, deux rondelles 78 identiques aux rondelles 68 de la figure 5, puis deux membranes 80 identiques à la membrane 66 de la même figure. Les membranes 80 peuvent aussi être remplacées par des diaphragmes poreux. L'empilement se poursuit, comme dans la cellule de la figure 5, par deux rondelles 68, deux anneaux 70 et deux rondelles 72.

Lorsque cette cellule doit travailler avec des liquides à faible conductivité, on peut donc, comme pour la cellule de la figure 5, supprimer les anneaux 70 ainsi que les rondelles 68 et 72 , et les remplacer par les rondelles 38 de la figure 1.

Dans tous les modes de réalisation qui viennent d'être décrits, il peut être avantageux d'allonger le trajet des fluides entre les électrodes, ce qui améliore l'efficacité des processus électrochimiques. Pour obtenir cet effet, divers éléments de la cellule, comme, par exemple, la rondelle 38 de la figure 1, peuvent être dotés en leur centre d'une grille 82 servant de promoteur de turbulences et d'espaceur entre électrodes. Cette grille est avantageusement réalisée en un matériau isolant et chimiquement stable, tel que le polypropylène ou le polyéthylène.

Ainsi est proposée une cellule électrochimique dont la structure modulaire, liée à l'emploi d'éléments interchangeables, lui permet une large variété de configurations répondant aux divers besoins des utilisateurs.

## Revendications

1. Cellule électrochimique modulaire, **caractérisée en ce qu'**elle comporte:
- deux ensembles sensiblement identiques (10, 12, 62, 64) comprenant chacun un bâti (14) percé d'un logement cylindrique et d'une ouverture le traversant dans sa portion située à l'extérieur dudit logement et pouvant être reliée à un conduit d'amenée ou d'évacuation d'un fluide, et une électrode (22) en forme de disque disposée à l'intérieur de chaque logement, les deux bâtis étant disposés de manière à ce que leurs électrodes respectives soient en face l'une de l'autre,
- inséré entre lesdits ensembles, des moyens intercalaires ayant, au moins, pour fonction d'assurer la circulation et la répartition dudit fluide entre les électrodes, et
- des organes d'assemblage entre eux desdits ensembles et desdits moyens intercalaires.

2. Cellule selon la revendication 1, **caractérisée en ce que** lesdites électrodes (22) comportent un substrat conducteur et une couche conductrice de diamant déposée sur ledit substrat.

3. Cellule selon la revendication 1, **caractérisée en ce que** chaque électrode (22) est fixée sur un disque support conducteur (20) pouvant être connecté à une source d'alimentation et dont la position axiale à l'intérieur dudit logement est réglable de l'extérieur pour affleurer la face externe de l'électrode et le bord du bâti.

4. Cellule selon la revendication 3, **caractérisée en ce que** ledit logement contient une bague (18) entourant le disque support (20) et dont la position axiale est réglable de l'extérieur pour venir comprimer un joint d'étanchéité (32) entre l'électrode, le logement et le disque.

5. Cellule selon la revendication 1, **caractérisée en ce que** les bâtis (14) ont chacun une ouverture qui débouche, vers l'intérieur, par une rainure en arc de cercle (36) et sont disposés de manière à ce que lesdites rainures se trouvent diamétralement opposées, l'ouverture d'un bâti servant à l'amenée du fluide et l'ouverture de l'autre à son évacuation.

6. Cellule selon la revendication 5, **caractérisée en ce que** lesdits moyens intercalaires comportent une rondelle isolante (38) percée d'orifices (40) situés en regard desdites rainures, chacun de ces orifices communiquant avec la portion interne de la rondelle par un canal radial (42).

7. Cellule selon la revendication 5, **caractérisée en ce que** lesdits moyens intercalaires comportent:
- un anneau d'espacement plat isolant (48) percé d'orifices (40) situés en regard desdites rainures, chacun de ces orifices communiquant avec la portion interne de l'anneau par un canal radial (42), et
- deux rondelles isolantes (50) disposées de part et d'autre de l'anneau et percées chacune d'une fente en arc de cercle (52) située en regard d'une des rainures.

8. Cellule selon la revendication 5, **caractérisée en ce que** lesdits moyens intercalaires comportent:
- un anneau plat isolant (54) percé de deux fentes en arc de cercle (60) situées en regard desdites rainures,
- une électrode bipolaire en forme de disque (58) disposée à l'intérieur dudit anneau, et
- deux rondelles isolantes (56) disposées de part et d'autre de l'anneau et percées chacune d'orifices (40) situés en regard d'une des rainures, chacun de ces orifices communiquant avec la portion interne de la rondelle par un canal radial (42).

9. Cellule selon la revendication 1, **caractérisée en ce que** les bâtis (14) ont chacun deux ouvertures qui débouchent, vers l'intérieur, par deux rainures en arc de cercle (36) diamétralement opposées, lesdits bâtis étant disposés de manière à ce que leurs rainures respectives se trouvent en regard, les ouvertures de chaque bâti servant respectivement à l'amenée et à l'évacuation d'un fluide.

10. Cellule selon la revendication 9, **caractérisée en ce que** lesdits moyens intercalaires comportent:
- une membrane conductrice sélectivement perméable (66) ou un diaphragme poreux, et
- deux rondelles isolantes (38) disposées de part et d'autre de la membrane ou du diaphragme et percées chacune d'orifices (40) situés en regard desdites rainures, chacun de ces orifices communiquant avec la portion interne de la rondelle par un canal radial (42).

11. Cellule selon la revendication 9, **caractérisée en ce que** lesdits moyens intercalaires comportent:
- un anneau creux central (76) pouvant être relié à un conduit d'amenée et à un conduit d'évacuation de fluide,
- deux rondelles isolantes (78) disposées de part et d'autre de l'anneau,
- deux membranes conductrices sélectivement perméables (80) ou deux diaphragmes poreux disposés respectivement de l'autre côté de ces deux rondelles, et
- deux rondelles isolantes (38) disposées respectivement de l'autre côté des deux membranes ou diaphragmes et percées chacune d'orifices (40) situés en regard desdites rainures, chacun de ces orifices communiquant avec la portion interne de la rondelle par un canal radial (42).
